# EUROPEAN PATENT APPLICATION

(11) **EP 4 549 151 A1**
(43) Date of publication of application: **07.05.2025**
(21) Application number: 24206522.5
(22) Date of filing: 14.10.2024
(51) Int. Cl.: B33Y 80/00, F28F 7/02, F28F 9/02

(54) **HEAT EXCHANGER WITH STIFFENING TUBE CONNECTORS**

(30) Priority: 03.11.2023 US 202318386819
(71) Applicant: Hamilton Sundstrand Corporation, Charlotte, NC 28217-4578 (US)
(72) Inventor: STREETER, James, Torrington, 06790 (US); NGATU, Grum, South Windsor, CT 06074 (US)
(74) Representative: Dehns

(57) **Abstract**

A heat exchanger having: an upstream header (110); a downstream header (120); a core (130) extending from an upstream end at the upstream header (110) to a downstream end at the downstream header (120), wherein the core (130) includes tubes (170) arranged in a square matrix that defines rows of tubes (170) arranged in a row direction and columns of the tubes (170) arranged in a column direction that is normal to the row direction, each of the tubes (170) defining an upstream end and a downstream end that are spaced apart from each other in a longitudinal direction, and an outer boundary of the core (130) is defined by outer ones of the tubes (170), wherein each of the tubes (170) is longitudinally divided into tube segments; and tube connectors (240) extending between the tube segments and interconnecting longitudinally and diagonally adjacent ones of the tube segments to stiffen the core (130).

## Description

### BACKGROUND

The embodiments herein relate to heat exchangers and more specifically to a heat exchanger with stiffening tube connectors.

Heat exchangers with circular or elliptical tubular core cross sections are effective in addressing the structural challenges experienced in high pressure and temperature environments, while retaining thermodynamic performance. To address vibratory fatigue, and avoid unwanted bending of core tubular members, the core tubular members may be tied together to increase their natural frequency. However, such ties may be unreliable and may not achieve the desired damping effects.

### BRIEF SUMMARY

Disclosed is a heat exchanger, including: an upstream header; a downstream header; a core extending from an upstream end at the upstream header to a downstream end at the downstream header, wherein the core includes tubes arranged in a square matrix that defines rows of tubes arranged in a row direction and columns of the tubes arranged in a column direction that is normal to the row direction, each of the tubes defining an upstream end and a downstream end that are spaced apart from each other in a longitudinal direction, and an outer boundary of the core is defined by outer ones of the tubes, wherein each of the tubes is longitudinally divided into tube segments; and tube connectors extending between the tube segments and interconnecting longitudinally and diagonally adjacent ones of the tube segments to stiffen the core.

In addition to one or more aspects of the heat exchanger or as an alternate, the tube connectors extend longitudinally from a connector upstream end to a connector downstream end, each having: upstream ports at the upstream end; downstream ports at the downstream end; and a longitudinal center having an outer shell, wherein the outer shell defines therein flow paths between the upstream ports and the downstream ports.

In addition to one or more aspects of the heat exchanger or as an alternate, an outer boundary of the tube connectors converges at the longitudinal center and diverges toward the upstream and downstream ends.

In addition to one or more aspects of the heat exchanger or as an alternate, the tube connectors include four of the upstream ports, four of the downstream ports, and four of the flow paths within the outer shell.

In addition to one or more aspects of the heat exchanger or as an alternate, each of the tube connectors has a mixing chamber defined within the outer shell, intermediate of the upstream ends and the downstream ends, and the flow paths are fluidly coupled to each other at the mixing chamber.

In addition to one or more aspects of the heat exchanger or as an alternate, the flow paths in each the tube connectors are fluidly isolated from each other within the outer shell.

In addition to one or more aspects of the heat exchanger or as an alternate, each of the tubes is longitudinally divided into an upstream segment, a downstream segment, and an intermediate segment therebetween; the tube connectors include a first upstream set of the tube connectors is that longitudinally between and connects the upstream segment and the intermediate segment of the tubes; and the tube connectors include a first downstream set of the tube connectors that is longitudinally between and connects the downstream segment and the intermediate segment of the tubes.

In addition to one or more aspects of the heat exchanger or as an alternate, the core has a rectangular cross section, and the outer boundary defines rectangular outer core faces that define outer core corners of the core, including: first and second outer core faces that are opposite each other and extend longitudinally from the upstream header to the downstream header and along the row direction; and third and fourth outer core faces that are opposite each other and extend longitudinally from the upstream header to the downstream header and along the column direction that is normal to the row direction.

In addition to one or more aspects of the heat exchanger or as an alternate, longitudinally adjacent to the first upstream set of the tube connectors, the upstream and intermediate segments of the tubes are arranged as first upstream tube clusters defining a 2x2 configuration; and in each of the first upstream tube clusters, one of the tube connectors interconnects the upstream and intermediate segments of longitudinally and diagonally adjacent ones of the tubes.

In addition to one or more aspects of the heat exchanger or as an alternate, longitudinally adjacent to the first downstream set of the tube connectors, the downstream and intermediate segments of the tubes are arranged as first downstream tube clusters defining a 2x2 configuration; and in each of the first downstream tube clusters, one of the tube connectors interconnects the downstream and intermediate segments of longitudinally and diagonally adjacent ones of the tubes.

In addition to one or more aspects of the heat exchanger or as an alternate, at a longitudinal center of the upstream segment of the tubes: the tubes are arranged as second upstream tube clusters defining a 4x4 configuration; and each of the second upstream tube clusters has a cluster center along the row and column directions; and within each of the second upstream tube clusters: four of the tubes that are located at the cluster center are longitudinally divided into upstream and downstream portions; and one of the tube connectors interconnects the upstream and downstream portions of longitudinally and diagonally adjacent ones of the tubes within one of the second upstream tube clusters.

In addition to one or more aspects of the heat exchanger or as an alternate, at a longitudinal center of the downstream segment of the tubes: the tubes are arranged as second downstream tube clusters defining a 4x4 configuration; and each of the second downstream tube clusters has a cluster center along the row and column directions, and within each of the second downstream tube clusters: four of the tubes that are located at the cluster center are longitudinally divided into upstream and downstream portions; and one of the tube connectors interconnects the upstream and downstream portions of longitudinally and diagonally adjacent ones of the tubes within one of the second downstream tube clusters.

In addition to one or more aspects of the heat exchanger or as an alternate, within a longitudinal center of the intermediate segment of the tubes, the tubes are arranged as intermediate tube clusters defining a 4x4 configuration, wherein the intermediate tube clusters define opposite cluster corners, and one of the tubes is located at each of the cluster corners; within the intermediate tube clusters, interior divided tubes include the tubes that are located at the cluster corners and are spaced apart from the outer core faces, wherein the interior divided tubes are divided into upstream and downstream portions; and one of the tube connectors interconnects the upstream and downstream portions of longitudinally and diagonally adjacent ones of the interior divided tubes.

In addition to one or more aspects of the heat exchanger or as an alternate, within the intermediate tube clusters, first outer divided tubes include: the tubes at the cluster corners along the first and second outer core faces that are spaced apart from the outer core corners, and the tubes that are adjacent thereto in the row direction, wherein the first outer divided tubes are divided into upstream and downstream portions; one of the connectors interconnects the upstream and downstream portions of longitudinally and diagonally adjacent ones of the first outer divided tubes.

In addition to one or more aspects of the heat exchanger or as an alternate, within the intermediate tube clusters, second outer divided tubes include the tubes at the cluster corners along the third and fourth outer core faces that are spaced apart from the outer core corners, and the tubes that are adjacent thereto in the column direction, wherein the second outer divided tubes are divided into upstream and downstream portions; and one of the connectors interconnects the upstream and downstream portions of longitudinally and diagonally adj acent ones of the second outer divided tubes.

In addition to one or more aspects of the heat exchanger or as an alternate, the upstream header forms an upstream header trunk that subdivides along the longitudinal direction into upstream header branches that are fluidly coupled to the upstream end of the tubes; and the downstream header forms a downstream header trunk that subdivides along the longitudinal direction into downstream header branches that are fluidly coupled to the downstream ends of the tubes.

In addition to one or more aspects of the heat exchanger or as an alternate, every other column of the tubes is offset along the column direction by a distance that is at least a diameter of the tubes.

In addition to one or more aspects of the heat exchanger or as an alternate, the tubes have a circular or oval cross section.

In addition to one or more aspects of the heat exchanger or as an alternate, the tubes are longitudinally divided so that adjacent ones of the tube connectors in the row direction and the column direction within each of the upstream, downstream and intermediate segments are longitudinally offset from each other.

In addition to one or more aspects of the heat exchanger or as an alternate, the core is formed by additive manufacturing.

### BRIEF DESCRIPTION OF THE DRAWINGS

The present disclosure is illustrated by way of example and not limited in the accompanying figures in which like reference numerals indicate similar elements.
FIG. 1A is a perspective view of a heat exchanger with stiffening tube connectors according to an embodiment;
FIG. 1B is a cross section view of the heat exchanger along line 1B-1B shown in FIG. 1A;
FIG. 1C is a side view of the heat exchanger of FIG. 1A;
FIG. 2A is a side view of a tube connector according to an embodiment, where the tube connector includes a flow mixer;
FIG. 2B is another side view of the tube connector;
FIG. 2C is a perspective view of the tube connector;
FIG. 2D is an end view of the tube connector;
FIG. 2E is a cross section of the tube connector along line 2E-2E shown in FIG. 2A;
FIG. 3A is a side view of a tube connector according to another embodiment, where the flow paths are separated;
FIG. 3B is another side view of the tube connector;
FIG. 3C is a perspective view of the tube connector;
FIG. 3D is an end view of the tube connector;
FIG. 3E is a cross section of the tube connector along line 3E-3E shown in FIG. 3A;
FIG. 4A is a cross section view of the heat exchanger along line 4A-4A shown in FIG. 1C, showing flow connectors between an upstream segment of the core and an intermediate segment of the core;
FIG. 4B is a cross section view of the heat exchanger along line 4B-4B shown in FIG. 1C, showing flow connectors between a downstream segment of the core and the intermediate segment of the core;
FIG. 5A is a cross section view of the heat exchanger along line 5A-5A shown in FIG. 1C, showing flow connectors connecting some of the tubes within the upstream segment of the core;
FIG. 5B is a cross section view of the heat exchanger along line 5B-5B shown in FIG. 1C, showing flow connectors connecting some of the tubes within the downstream segment of the core; and
FIG. 6 is a cross section view of the heat exchanger along line 6-6 shown in FIG. 1C, showing flow connectors connecting some of the tubes within the intermediate segment.

### DETAILED DESCRIPTION

Aspects illustrated in the figures are for purposes of supporting the disclosure and are not in any way intended on limiting the scope of the disclosed embodiments. Any sequence of numbering in the figures is for reference purposes only.

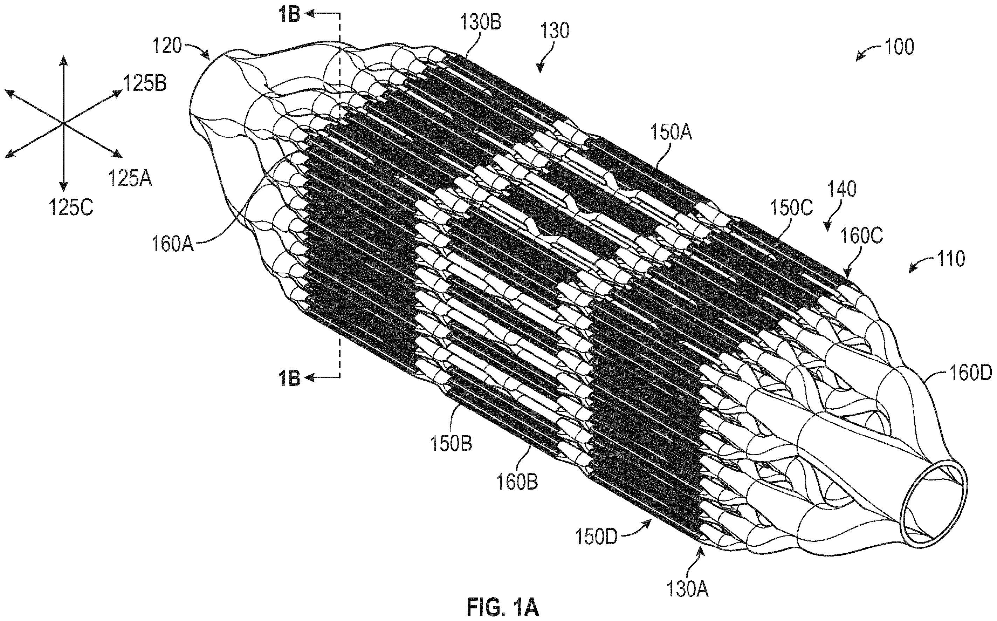

Turning to generally to FIG. 1A, a cross-flow heat exchanger 100 is shown. The heat exchanger 100 includes an upstream header 110 and a downstream header 120 spaced apart along the longitudinal direction 125A (longitudinally) from each other. A core 130 extends from an upstream end 130A at the upstream header 110 to a downstream end 130B at the downstream header 120. The core 130 may be formed by additive manufacturing.

The core 130 has an outer boundary 140 that is a cuboid with a rectangular cross section. Specifically, the outer boundary 140 has four rectangular outer core faces 150 and four longitudinally extending outer core corners 160 located at intersections of pairs of the outer core faces 150. The outer core faces 150 include first and second outer core faces 150A, 150B that are opposite each other, extend longitudinally from the upstream header 110 to the downstream header 120 and along a row direction 125B (a first transverse direction). The core 130 has third and fourth outer core faces 150C, 150D that are opposite each other, and extend longitudinally from the upstream header 110 to the downstream header 120 and along a column direction 125C (a second transverse direction). The longitudinal direction 125, row direction 125B and column direction 125C are normal to each other. The outer core corners 160 include first through fourth outer core corners 160A-160D.

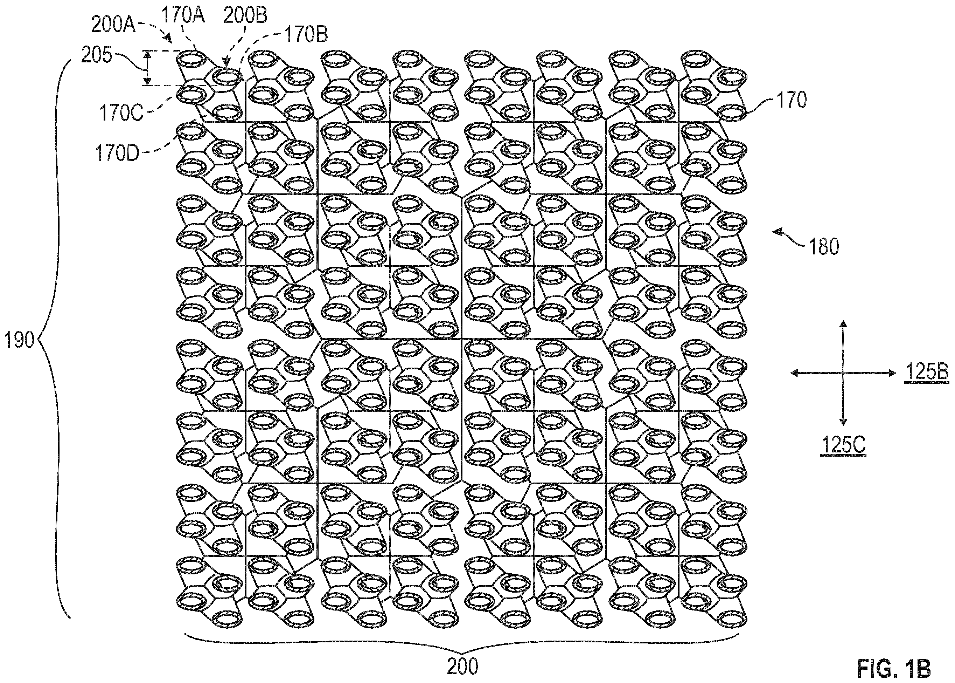

Turning to FIG. 1B, the core 130 includes a plurality of tubes 170 arranged in a rectangular grid 180 (or matrix) defining rows 190 of the tubes 170 arranged in the row direction 125B and columns 200 of the tubes 170 arranged in the column direction 125C. The tubes 170 may have a same shape as each other, which may be a circular or oval cross section. Every other column 200 of the tubes 170 may be offset by an offset distance 205 along the column direction 125C by a diameter or more of the tubes 170. This configuration provides ones of the tubes 170, such as tubes 170A, 170B, in adjacent columns, such as columns 200A, 200B, that are diagonally offset from each other.

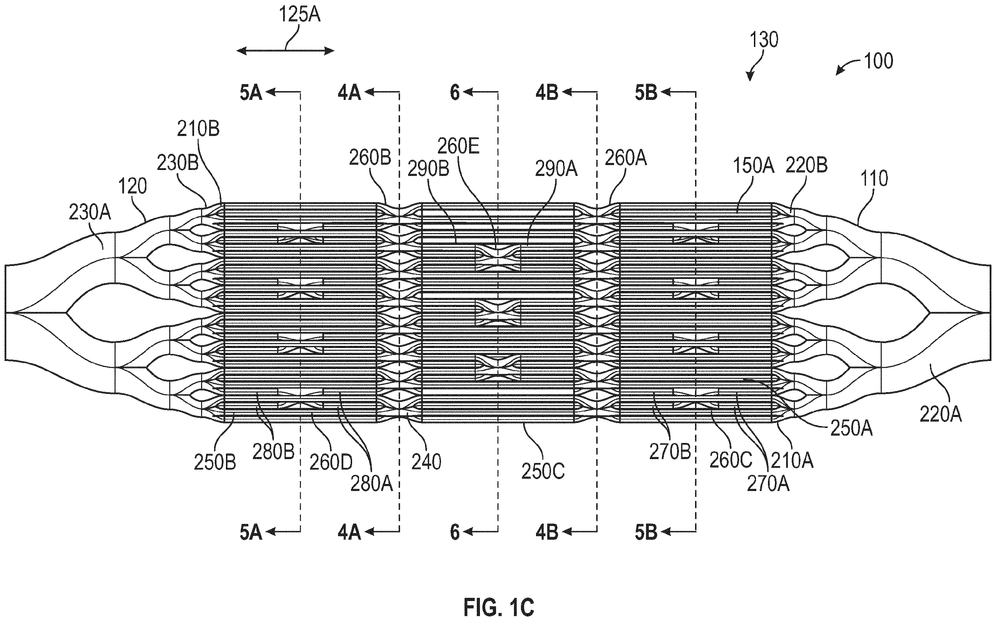

Turning to FIG. 1C, which shows the core 130 and the upstream and downstream headers, and the first face 150A of the core 130. The outer boundary 140 of the core 130 is defined by outer ones of the tubes 170. Each of the tubes 170 defines a longitudinal upstream end 210A and a longitudinal downstream end 210B. The upstream header 110 forms an upstream header trunk 220A that subdivides along the longitudinal direction 125A into upstream header branches 220B that are fluidly coupled to the upstream ends 210A of the tubes 170. The downstream header 110 forms a downstream header trunk 230A that subdivides along the longitudinal direction 125A into downstream header branches 230B that are fluidly coupled to the downstream ends 210B of the tubes 170.

Air may be the working medium for the disclosed heat exchanger 100, which may flow within, over and around an exterior of the tubes 170. As disclosed herein, additive manufacturing capabilities are used to create continuous, homogeneous transitions between the tubular core member of the heat exchanger 100. As disclosed in greater detail below, adjacent groups of tubes 170, which in operation are desirably maintained at similar temperatures, are braced with tube connectors 240 (for simplicity, connectors) that effectively dampen vibrations to avoid vibratory fatigue of the tubes 170.

As shown in FIG. 1C, each of the tubes 170 is longitudinally divided into segments 250. Specifically, each of the tubes 170 is longitudinally divided into an upstream segment 250A, a downstream segment 250B, and an intermediate segment 250C therebetween. In the illustrated embodiment, the intermediate segment 250C is a center segment.

A first upstream set 260A (or first set) of the connectors 240 extends longitudinally between and connects the upstream segment 250A of the tubes 170 and the intermediate segment 250C of the tubes 170. A first downstream set 260B (or second set) of the tube connectors 240 extends longitudinally between and connects the downstream segment 250B and the intermediate segment 250C of the tubes 170.

Within the upstream segment 250A of the tubes 170, some of the tubes 170 are separated into first upstream and downstream portions 270A, 270B that are interconnected by a second upstream set 260C (or third set) of the connectors 240. Within the downstream segment 250B of the tubes 170, some of the tubes 170 are separated into second upstream and downstream portions 280A, 280B that are interconnected by a second downstream set 260D (or fourth set) of the connectors 240. Within the intermediate segment 250C of the tubes 170, some of the tubes 170 are separated into third upstream and downstream portions 290A, 290B interconnected by an intermediate set 260E (or fifth set) of the connectors 240. These configurations are discussed in greater detail, below.

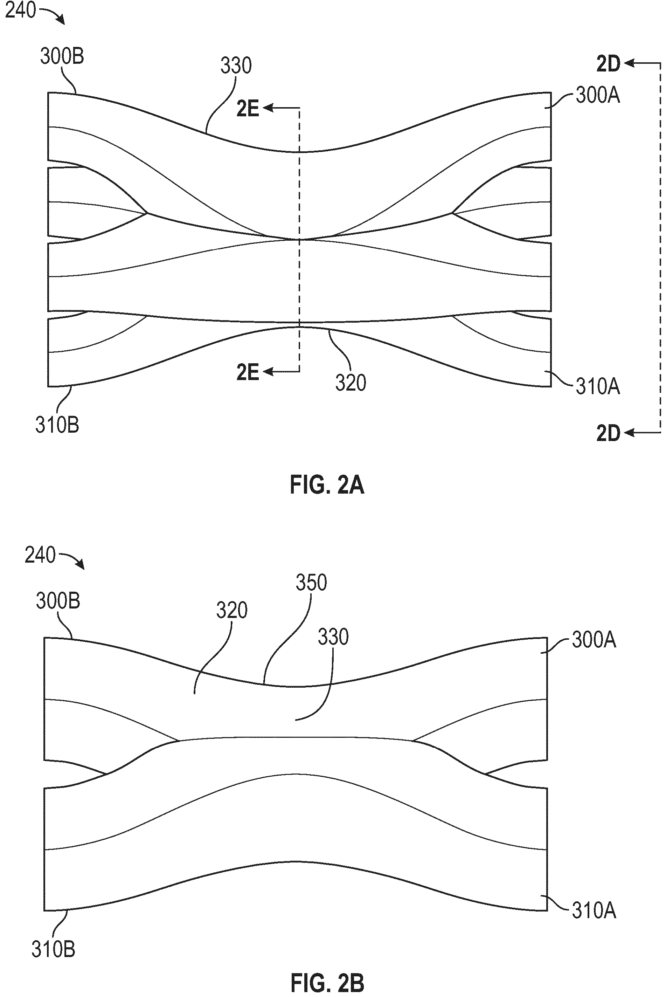

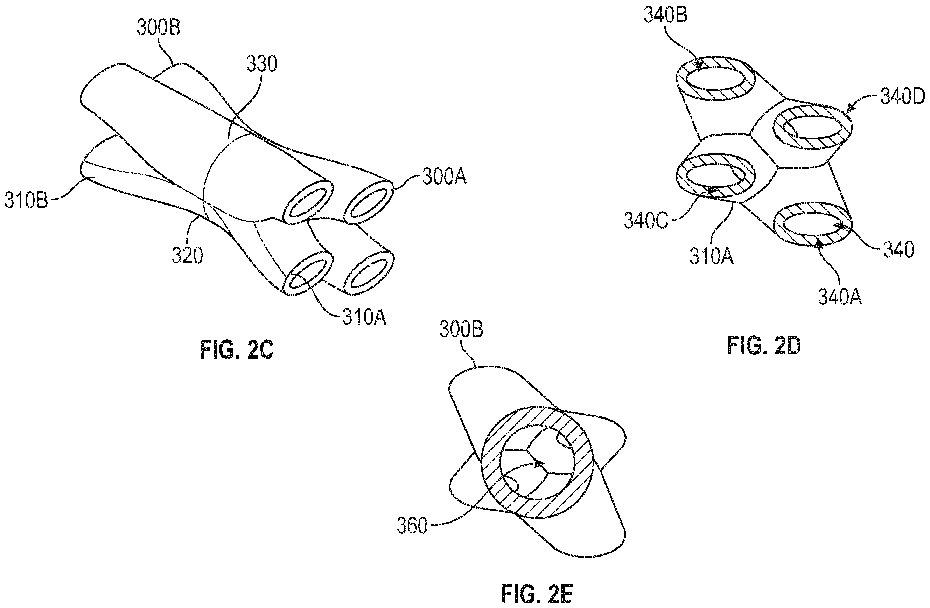

Turning to FIGS. 2A-2E, the connectors 240 extend longitudinally from a connector upstream end 300A to a connector downstream end 300B. Each of the connectors 240 has a plurality of upstream ports 310A on the upstream end 300A, and a corresponding plurality downstream ports 310B on the downstream end 300B. The connectors 240 have a longitudinal center 320 having a unitary outer shell 330. The outer shell 330 defines a corresponding plurality of flow paths 340, between the upstream ports 310A and the downstream ports 310B.

The connectors 240 shown in FIGS. 2A-2E each include four of the upstream ports 310A, four of the downstream ports 310B and four of the flow paths 340 within the shell 330. The connectors 240, via the ports, are positioned to connect four of the tubes 170 that are longitudinally aligned and diagonally adjacent to each other. For example, the connectors 240 are positioned to connect tubes 170A, 170B in FIG. 1B that are adjacent in the row direction 125B as well as tubes 170C, 170D that are adjacent to tubes 170A, 170B in the column direction 125C.

An outer boundary 350 of the connectors 240 converges at the longitudinal center 320 and diverges toward the upstream and downstream ends 300A, 300B. In the embodiment shown in FIG. 2E, each of the connectors 240 has a mixing chamber 360 defined within the outer shell 330, at the center 320 of the connectors 240. That is, flow is capable of mixing to minimize flow temperature differences in medium flowing though the tubes 170 and allowing for a balancing of mass flow of the fluid, removing maldistribution of the fluid.

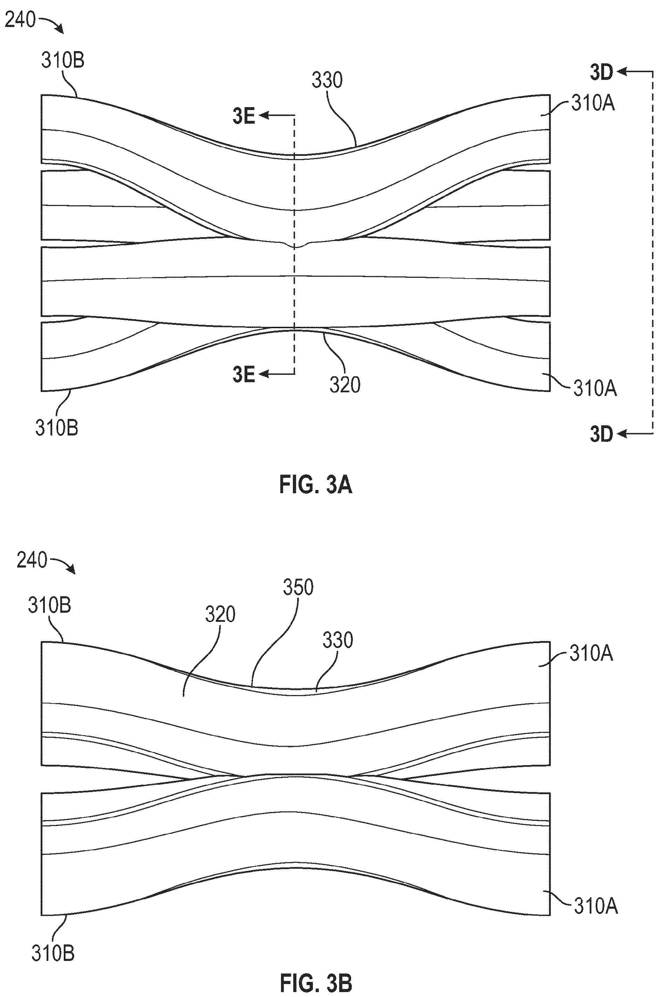

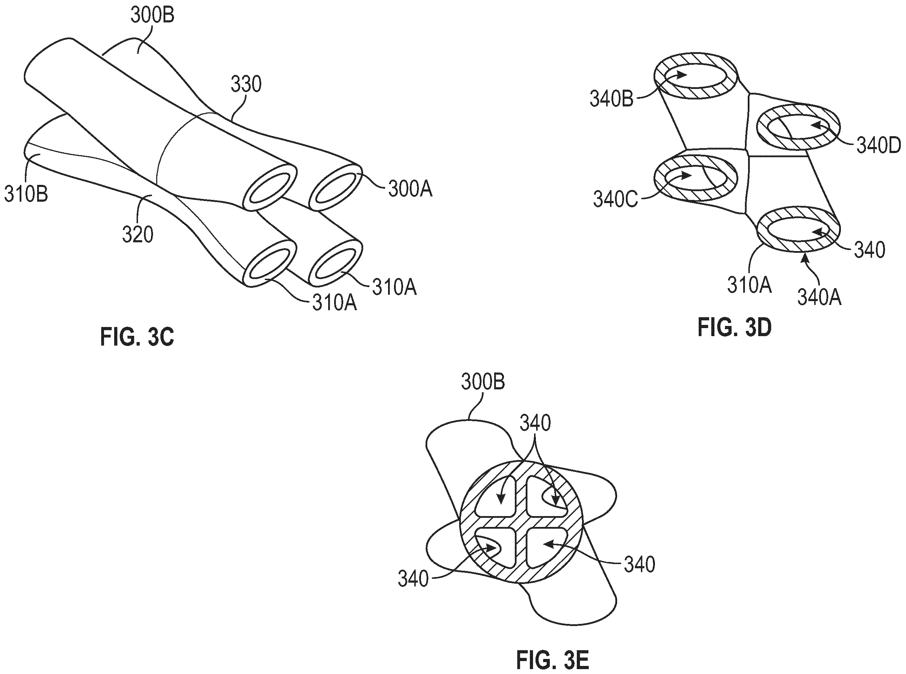

Turning to FIGS. 3A-3E, the connectors 240 extend longitudinally from a connector upstream end 300A to a connector downstream end 300B. Each of the connectors 240 has a plurality of upstream ports 310A on the upstream end 300A, and a corresponding plurality downstream ports 310B on the downstream end 300B. The connectors 240 have a longitudinal center 320 having a unitary outer shell 330. The outer shell 330 defines a corresponding plurality of flow paths 340, between the upstream ports 310A and the downstream ports 310B.

The connectors 240 shown in FIGS. 3A-3E each include four of the upstream ports 310A, four of the downstream ports 310B and four of the flow paths 340 within the shell 330. The connectors 240, via the ports, are positioned to connect four of the tubes 170 that are longitudinally aligned and diagonally adjacent to each other. For example, the connectors 240 are positioned to connect tubes 170A, 170B in FIG. 1B that are adjacent in the row direction 125B as well as tubes 170C, 170D that are adjacent to tubes 170A, 170B in the column direction 125C.

An outer boundary 350 of the connectors 240 converges at the longitudinal center 320 and diverges toward the upstream and downstream ends 300A, 300B. In the embodiment shown in FIG. 3E, the plurality of flow paths 340 within each of the tube connectors 240 are fluidly isolated from each other within the outer shell 330. Thus temperatures between the paths is modulated by thermal conduction through the path walls of the connectors 240, and the pressure loss that might occur from mixing flows is avoided.

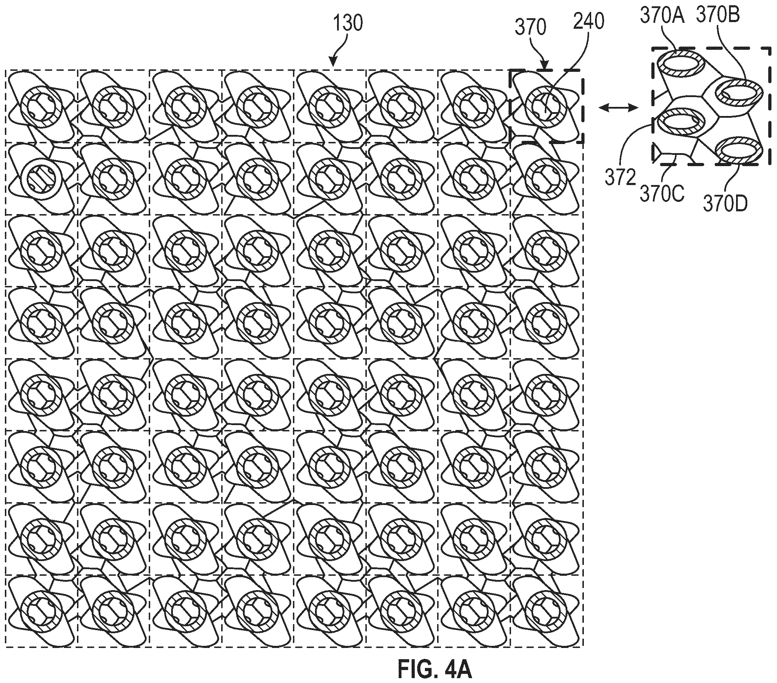

With reference to FIG. 4A, longitudinally adjacent to the first downstream set 260B of the connectors 240, the intermediate and downstream segments 250C, 250B (FIG. 1C) of the tubes 170 are arranged as first downstream tube clusters 370. The first downstream tube clusters 370 define a 2x2 (row direction 125B x column direction 125C) configuration, i.e., including four tubes 170 per cluster such as tubes 370A-370D. In each of the first downstream tube clusters 370, one of the tube connectors 240 interconnects the intermediate and downstream segments 250C, 250B of longitudinally and diagonally adjacent ones of the tubes 170. For illustration purposes, one of the clusters 372 is shown adjacent to the core 130 without a tube connector 240. It is to be appreciated that some of the tube connectors 240 shown in FIG. 4A that connect the tubes 170 in the intermediate and downstream segments 250C, 250B are along the outer faces 150 of the core 130 and would be visible when viewing the core 130.

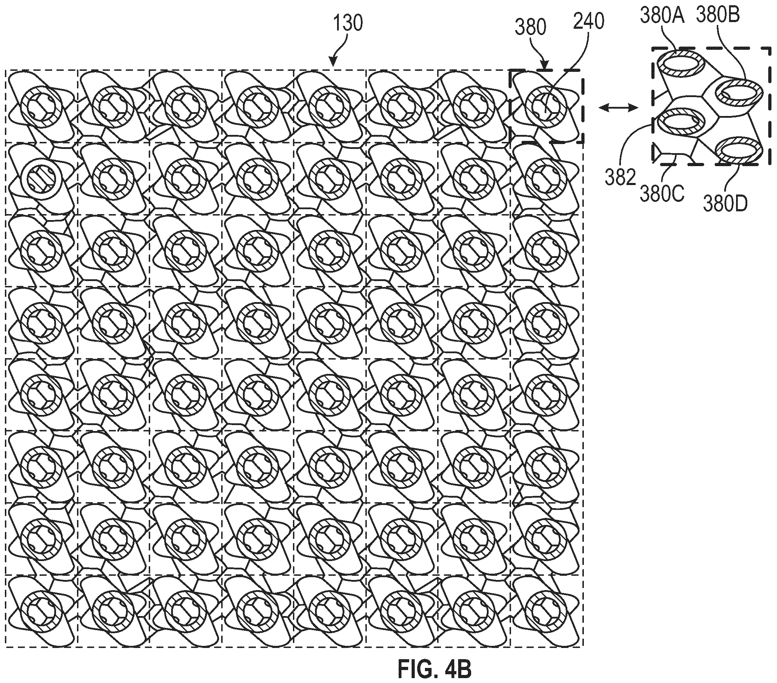

Similarly, with reference to FIG. 4B, longitudinally adjacent to the first upstream set 260A of the connectors 240 (FIG. 1B), the upstream and intermediate segments 250A, 250C (FIG. 1C) of the tubes 170 are arranged as first upstream tube clusters 380. The first upstream tube clusters 380 define a 2x2 (row direction 125B x column direction 125C) configuration i.e., including four tubes 170 per cluster such tubes 380A-380D. In each of the first upstream tube clusters 380, one of the connectors 240 interconnects the upstream and intermediate segments 250A, 250C of longitudinally and diagonally adjacent ones of the tubes 170. For illustration purposes, one of the clusters 382 is shown adjacent to the core 130 without the upstream and downstream tube connectors 240. It is to be appreciated that some of the tube connectors 240 shown in FIG. 4B that connect the tubes 170 in the upstream and intermediate segments 250A, 250C are along the outer faces 150 of the core 130 and would be visible when viewing the core 130.

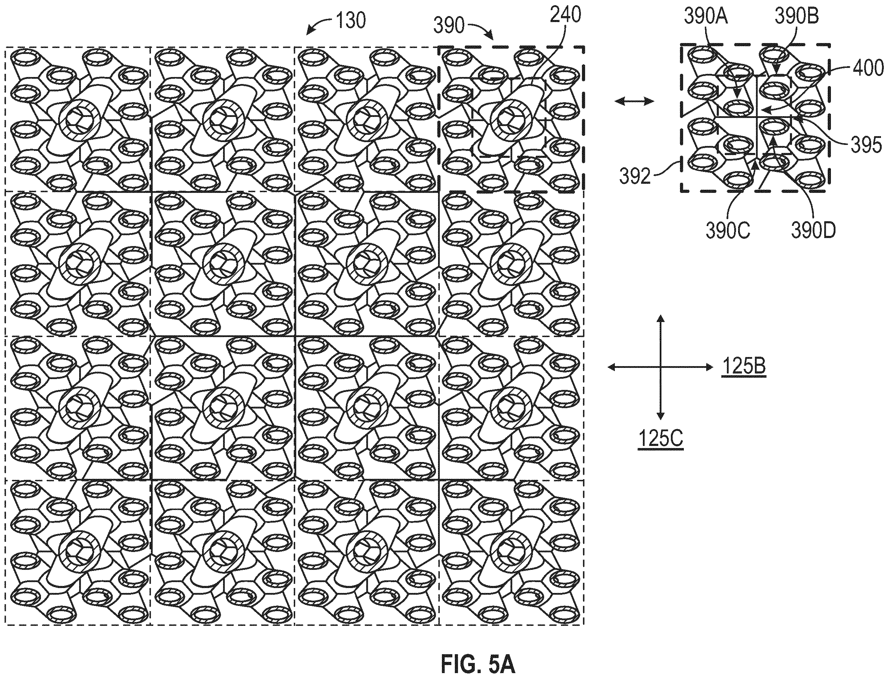

With reference to FIG. 5A, at a longitudinal center of the downstream segment 250B of the tubes 170, the tubes 170 are arranged as second downstream tube clusters 390. The second downstream tube clusters 390 define a 4x4 (row direction 125B x column direction 125C) configuration, i.e., sixteen tubes per cluster 390. Each of the second downstream tube clusters 390 has a cluster center 400 along the row and column directions 125B, 125C, around which four tubes are arranged, including tubes 390A-390D. The four of the tubes 390A-390D at the cluster center 400 are longitudinally divided into the upstream and downstream portions 270A, 270B (FIG. 1C). One of the connectors 240 interconnects the upstream and downstream portions 280A, 280B of longitudinally and diagonally adjacent ones of the tubes 170 within one of the second downstream tube clusters 390. For illustration purposes, one of the clusters 392 is shown adjacent to the core 130 without a tube connector 240, and a dashed-box 395 identifies the location of the tube connector 240. It is to be appreciated that the tube connectors 240 shown in FIG. 5A are spaced apart from the outer faces 150 of the core 130. Thus a view of the tube connectors 240 from outside the core 130 would be at least partially obstructed by tubes 170 that are continuous at the outer face 150 of the core 130.

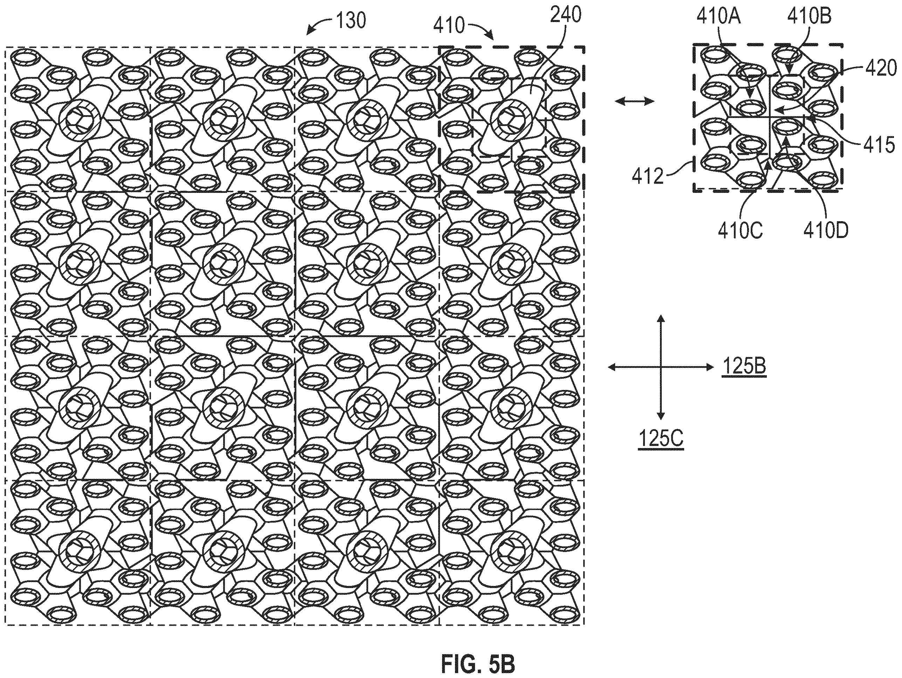

Similarly, with reference to FIG. 5B, at a longitudinal center of the upstream segment 250A of the tubes 170, the tubes 170 are arranged as second upstream tube clusters 410. The second upstream clusters 410 define a 4x4 (row direction 125B x column direction 125C) configuration, i.e., sixteen tubes per cluster 410. Each of the second upstream tube clusters 410 has a cluster center 420 along the row and column directions 125B, 125C, around which four tubes are arranged, including tubes 410A-410D. The four of the tubes 410A-410D at the cluster center 400 are longitudinally divided into the upstream and downstream portions 270A, 270B (FIG. 1C). One of the connectors 240 interconnects the upstream and downstream portions 270A, 270B of longitudinally and diagonally adjacent ones of the tubes 170 within one of the second upstream tube clusters 410. For illustration purposes, one of the clusters 412 is shown adjacent to the core 130 without the upstream and downstream tube connectors 240, and a dashed-box 415 identifies the location of the tube connector 240. It is to be appreciated that the tube connectors 240 shown in FIG. 5B are spaced apart from the outer faces 150 of the core 130. Thus a view of the tube connectors 240 from outside the core 130 would be at least partially obstructed by tubes 170 that are continuous at the outer face 150 of the core 130.

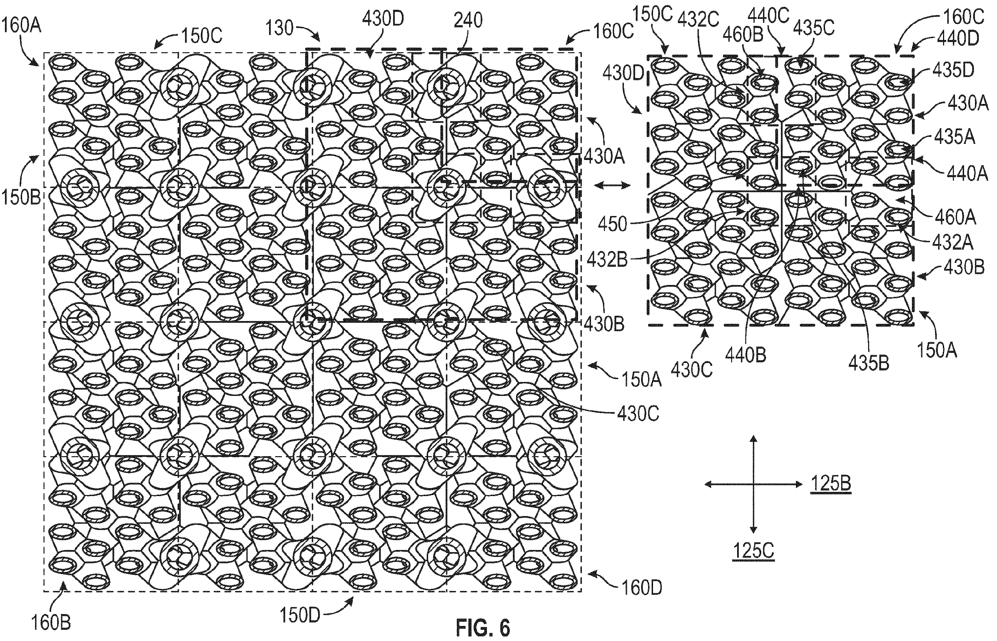

With reference to FIG. 6, within a longitudinal center of the intermediate segment 250C of the tubes 170, the tubes 170 are arranged as intermediate tube clusters 430. The intermediate tube clusters 430 define a 4x4 (row direction 125B x column direction 125C) configuration, i.e., sixteen tubes per cluster 430. The intermediate tube clusters 430 define cluster corners 440, including corners 440A-440D, and a respective one of the tubes 170, including tubes 435A-435D, is located at each of the cluster corners 440. As explained below, tube connectors 240 are utilized in the intermediate segment 250C of the core 130. Four of the intermediate tube clusters 430A-430D are shown without the downstream tube connectors 240 for illustration purposes. First through third dashed-boxes 432A-432C identify the locations of the tube connectors 240 that are at least partially within the intermediate tube cluster 430A that is adjacent to the outer corner 440D of the core 130.

Within the intermediate tube clusters 430, a set of interior divided tubes 450 include the tubes 170 that are located at the cluster corners 440 and are spaced apart from the outer core faces 150, as shown within the second dashed-box 432B. The interior divided tubes 450 are divided into the upstream and downstream portions 290A, 290B (FIG. 1C). One of the connectors 240 interconnects the upstream and downstream portions 290A, 290B of longitudinally and diagonally adjacent ones of the interior divided tubes 450. It is to be appreciated that the tube connectors 240 shown in FIG. 6 that connect the interior divided tubes 450 are spaced apart from the outer faces 150 of the core 130. Thus a view of the tube connectors 240 from outside the core 130 that connect the interior divided tubes 450 would be at least partially obstructed by tubes 170 that are continuous at the outer face 150 of the core 130 or by other tube connectors as indicated below.

Within the intermediate tube clusters 430, first outer divided tubes 460A include the tubes at the cluster corners 440 along the first and second outer core faces 150A, 150B that are spaced apart from the core corners 160, and the tubes 170 that are adjacent thereto in the row direction 125B. These tubes 460A are shown within box 432A as one example. The first outer divided tubes 460A are divided into upstream and downstream portions 290A, 290B (FIG. 1C). One of the connectors 240 interconnects the upstream and downstream portions 290A, 290B of longitudinally and diagonally adjacent ones of the first outer divided tubes 460A. It is to be appreciated that the tube connectors 240 shown in FIG. 6 that connect the first exterior divided tubes 460A are along the outer faces 150 of the core 130. Thus the tube connectors 240 from outside the core 130 that connect the first exterior divided tubes 460A would be at least partially visible and may visually obstruct other tube connectors 240 that are adjacent to it, at least in the row direction 125B.

Within the intermediate tube clusters 430, second outer divided tubes 460B include the tubes at the cluster corners 440 along the third and fourth outer core faces 150C, 150D that are spaced apart from the core corners 160, and the tubes 170 that are adjacent thereto in the column direction 125C. These tubes 460B are shown within box 432C as one example. The second outer divided tubes 460B are divided into upstream and downstream portions 290A, 290B (FIG. 1C). One of the connectors 240 interconnects the upstream and downstream portions 290A, 290B of longitudinally and diagonally adjacent ones of the second outer divided tubes 460B. It is to be appreciated that the tube connectors 240 shown in FIG. 6 that connect the second exterior divided tubes 460B are along the outer faces 150 of the core 130. Thus the tube connectors 240 from outside the core 130 that connect the second exterior divided tubes 460B would be at least partially visible and may visually obstruct other tube connectors 240 that are adjacent to it, at least in the column direction 125C.

In the above embodiments, the tubes 170 may be divided to have different lengths. That is, transversely adjacent (in the row and column directions 125B, 125C) ones of the tube connectors 240 within each of the upstream, downstream and intermediate segments 250A, 250B, 250C may be longitudinally offset from each other, e.g., by a distance that is equal to a partial length or more of the tube connectors 240. This may optimize airflow through and around the heat exchanger 100.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A heat exchanger, comprising:
an upstream header (110);
a downstream header (120);
a core (130) extending from an upstream end at the upstream header (110) to a downstream end at the downstream header (120),
wherein the core (130) includes tubes (170) arranged in a square matrix that defines rows of tubes (170) arranged in a row direction and columns of the tubes (170) arranged in a column direction that is normal to the row direction,
each of the tubes (170) defining an upstream end and a downstream end that are spaced apart from each other in a longitudinal direction, and
an outer boundary of the core (130) is defined by outer ones of the tubes (170),
wherein each of the tubes (170) is longitudinally divided into tube segments; and
tube connectors (240) extending between the tube segments and interconnecting longitudinally and diagonally adjacent ones of the tube segments to stiffen the core (130).

2. The heat exchanger of claim 1, wherein:
the tube connectors (240) extend longitudinally from a connector upstream end to a connector downstream end, each having:
upstream ports at the upstream end;
downstream ports at the downstream end; and
a longitudinal center having an outer shell, wherein the outer shell defines therein flow paths between the upstream ports and the downstream ports.

3. The heat exchanger of claim 2, wherein:
an outer boundary of the tube connectors (240) converges at the longitudinal center and diverges toward the upstream and downstream ends.

4. The heat exchanger of claim 3, wherein:
the tube connectors (240) include four of the upstream ports, four of the downstream ports, and four of the flow paths within the outer shell.

5. The heat exchanger of claim 4, wherein:
each of the tube connectors (240) has a mixing chamber defined within the outer shell, intermediate of the upstream ends and the downstream ends, and the flow paths are fluidly coupled to each other at the mixing chamber; and/or wherein:
the flow paths in each the tube connectors (240) are fluidly isolated from each other within the outer shell.

6. The heat exchanger of claim 4, wherein:
each of the tubes (170) is longitudinally divided into an upstream segment, a downstream segment, and an intermediate segment therebetween;
the tube connectors (240) include a first upstream set of the tube connectors (240) is that longitudinally between and connects the upstream segment and the intermediate segment of the tubes (170); and
the tube connectors (240) include a first downstream set of the tube connectors (240) that is longitudinally between and connects the downstream segment and the intermediate segment of the tubes (170).

7. The heat exchanger of claim 6, wherein
the core (130) has a rectangular cross section, and the outer boundary defines rectangular outer core faces that define outer core corners of the core (130), including:
first and second outer core faces that are opposite each other and extend longitudinally from the upstream header (110) to the downstream header (120) and along the row direction; and
third and fourth outer core faces that are opposite each other and extend longitudinally from the upstream header (110) to the downstream header (120) and along the column direction that is normal to the row direction.

8. The heat exchanger of claim 6, wherein:
longitudinally adj acent to the first upstream set of the tube connectors (240), the upstream and intermediate segments of the tubes (170) are arranged as first upstream tube clusters defining a 2x2 configuration; and
in each of the first upstream tube clusters, one of the tube connectors (240) interconnects the upstream and intermediate segments of longitudinally and diagonally adjacent ones of the tubes (170).

9. The heat exchanger of claim 6, wherein:
longitudinally adjacent to the first downstream set of the tube connectors (240), the downstream and intermediate segments of the tubes (170) are arranged as first downstream tube clusters defining a 2x2 configuration; and
in each of the first downstream tube clusters, one of the tube connectors (240) interconnects the downstream and intermediate segments of longitudinally and diagonally adjacent ones of the tubes (170).

10. The heat exchanger of claim 6, wherein:
at a longitudinal center of the upstream segment of the tubes (170):
the tubes (170) are arranged as second upstream tube clusters defining a 4x4 configuration; and
each of the second upstream tube clusters has a cluster center along the row and column directions; and
within each of the second upstream tube clusters:
four of the tubes (170) that are located at the cluster center are longitudinally divided into upstream and downstream portions; and
one of the tube connectors (240) interconnects the upstream and downstream portions of longitudinally and diagonally adjacent ones of the tubes (170) within one of the second upstream tube clusters; or wherein:
at a longitudinal center of the downstream segment of the tubes (170):
the tubes (170) are arranged as second downstream tube clusters defining a 4x4 configuration; and
each of the second downstream tube clusters has a cluster center along the row and column directions, and
within each of the second downstream tube clusters:
four of the tubes (170) that are located at the cluster center are longitudinally divided into upstream and downstream portions; and
one of the tube connectors (240) interconnects the upstream and downstream portions of longitudinally and diagonally adjacent ones of the tubes (170) within one of the second downstream tube clusters; or

11. The heat exchanger of claim 6, wherein:
within a longitudinal center of the intermediate segment of the tubes (170), the tubes (170) are arranged as intermediate tube clusters defining a 4x4 configuration,
wherein the intermediate tube clusters define opposite cluster corners, and one of the tubes (170) is located at each of the cluster corners;
within the intermediate tube clusters, interior divided tubes include the tubes that are located at the cluster corners and are spaced apart from the outer core faces,
wherein the interior divided tubes are divided into upstream and downstream portions; and
one of the tube connectors (240) interconnects the upstream and downstream portions of longitudinally and diagonally adjacent ones of the interior divided tubes.

12. The heat exchanger of claim 11, wherein:
within the intermediate tube clusters, first outer divided tubes include:
the tubes at the cluster corners along the first and second outer core faces that are spaced apart from the outer core corners, and the tubes that are adjacent thereto in the row direction,
wherein the first outer divided tubes are divided into upstream and downstream portions;
one of the connectors interconnects the upstream and downstream portions of longitudinally and diagonally adjacent ones of the first outer divided tubes; or wherein:
within the intermediate tube clusters, second outer divided tubes include the tubes at the cluster corners along the third and fourth outer core faces that are spaced apart from the outer core corners, and the tubes that are adjacent thereto in the column direction,
wherein the second outer divided tubes are divided into upstream and downstream portions; and
one of the connectors interconnects the upstream and downstream portions of longitudinally and diagonally adjacent ones of the second outer divided tubes.

13. The heat exchanger of claim 3, wherein:
the upstream header (110) forms an upstream header trunk that subdivides along the longitudinal direction into upstream header branches that are fluidly coupled to the upstream end of the tubes; and
the downstream header (120) forms a downstream header trunk that subdivides along the longitudinal direction into downstream header branches that are fluidly coupled to the downstream ends of the tubes.

14. The heat exchanger of any preceding claim, wherein:
every other column of the tubes (170) is offset along the column direction by a distance that is at least a diameter of the tubes (170).

15. The heat exchanger of any preceding claim, wherein:
the tubes (170) have a circular or oval cross section; and/or wherein:
the tubes (170) are longitudinally divided so that adjacent ones of the tube connectors (240) in the row direction and the column direction within each of the upstream, downstream and intermediate segments are longitudinally offset from each other; and/or wherein:
the core (130) is formed by additive manufacturing.
